# EUROPEAN PATENT SPECIFICATION

(11) **EP 4 001 726 B1**
(45) Date of publication and mention of the grant of the patent: **02.08.2023**
(21) Application number: 21382853.6
(22) Date of filing: 22.09.2021
(51) Int. Cl.: F16L 55/11, B65D 59/02, F16L 57/00

(54) **SEALING ELEMENT FOR PIPES**
DICHTELEMENT FÜR ROHRE
ÉLÉMENT D'ÉTANCHÉITÉ POUR TUYAUX

(30) Priority: 17.11.2020 ES 202032470 U
(43) Date of publication of application: 25.05.2022
(73) Proprietor: Brao Amo, Antonio, 08206 Sabadell (ES)
(72) Inventor: Brao Amo, Antonio, 08206 Sabadell (ES)
(74) Representative: Isern Patentes y Marcas S.L.

(56) References cited:
- ES-U- 1 236 244
- RO-B1- 123 196
- US-B1- 9 340 338
- US-B2- 10 640 996

## Description

### OBJECT OF THE INVENTION

The object of the present application is to provide a sealing element for pipes.

More specifically, the invention proposes the development of a sealing element for pipes of simple manufacture and placement that has regions which facilitate the ejection of the part during the manufacture thereof inside a mould.

### BACKGROUND OF THE INVENTION

Once tubular elements intended, for example, to create conduits to allow fluids to pass have been manufactured, they are usually accumulated or stored in open outdoor spaces and/or in closed areas. Since the two opposite ends of such conduits are exposed to the outside environment, the inside thereof is subject to possible dirt agents as well as the fact that small animals, such as insects, rodents, etc., can get inside.

To solve this problem, document ES 1236244 which defines a closing cap that satisfactorily solves the aforementioned drawback is known. However, it has been found that, due to the geometric configuration of the cap, it can present problems during the manufacturing process thereof, mainly arising during the step of removing the parts from the injection mould, since sometimes the parts are not automatically released from the manufacturing mould as would be desirable. This is essentially due to the distance provided between the wall of the stem and the outer flanges that have a larger diameter, which on such occasions requires the help of an operator to ensure the complete removal of all parts from the mould.

Another drawback detected is one related to the general rigidity of the cap, since it has been found that during the placement of the cap at the end of a tube, depending on how it is placed by the operator, it can deform in the area of the stem, being further placed, such that it is also desirable to obtain a higher degree of rigidity that reduces stresses.

Furthermore, the applicant is currently unaware of an invention that has all the features described in this specification.

A protective cap for the end of pipes is known from prior art document no. RO 123 196 A1. US 9340338 B1 and US 10640996 disclose other examples of a sealing member for pipes according to the preamble of claim 1.

### DESCRIPTION OF THE INVENTION

The present invention has been developed with the purpose of providing a sealing element which is configured as a novelty within the field of application and solves the aforementioned drawbacks, further contributing other additional advantages that will be obvious from the description below.

An object of the present invention is therefore to provide a sealing element for pipes, being of the type that comprises a body of injection-mouldable plastic material, being made up of a central stem section that has at one end a circular head region acting as a grip area, including on a stem section in a downward direction from said head region, a first centring region with a general inverted frustoconical shape, a second circumferential outer contour region that is defined by at least two flexible flaps formed from a pair of diametrically opposed grooves and a third circumferential outer contour positioning region, the second region having a larger diameter than the first and third regions. Particularly, the invention is characterised by including at least two spaced extensions, which protrude in the same direction perpendicular to the central stem section, which have a length equal to or less than the diameter of the third positioning region. These two extensions act as contact points linked to ejectors present in the mould for the manufacture of the tubular elements, in such a way that they facilitate removal and do not require the help of operators for the execution thereof, since they ensure the release of the part from the mould in each injection process of the parts at all times.

Preferably, each of the extensions is located in a region close to the two opposite ends of the central stem section. The fact that the two extensions are arranged in opposite areas with respect to the stem section facilitates the perpendicular ejection of the part from the cavity of the mould where it has been formed, preventing it from being caught in the cavity in an undesired way.

According to another aspect of the invention, the central stem has a cross-shaped cross-section. Advantageously, the cross-shaped cross-section comprised between the first and second regions has a decreasing configuration in a downstream direction from the first region towards the second region. In this way, the rigidity of the sealing element assembly is improved, while also allowing the flexibility of the flexible flaps.

Thus, the sealing element described represents an innovative structure with structural and constituent features heretofore unknown for its intended purpose, reasons which, taken together with its usefulness, provide it with sufficient grounds for obtaining the requested exclusivity privilege.

Other features and advantages of the sealing element object of the present invention will be evident in light of the description of a preferred, but not exclusive, embodiment which is illustrated by way of a non-limiting example in the drawings which are attached, wherein:

### BRIEF DESCRIPTION OF THE DRAWINGS

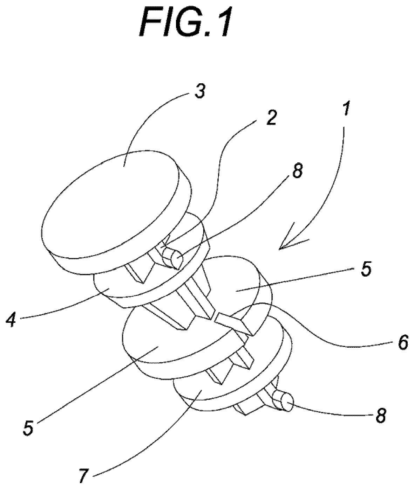

Figure 1 is a perspective view of a preferred embodiment of a sealing element for pipes according to the present invention;
Figure 2 is a side elevation and plan view from below of the sealing element represented in Figure 1;
Figure 3 is a longitudinal cross-sectional view of the sealing element shown in the previous figures.

### DESCRIPTION OF A PREFERRED EMBODIMENT

In light of the aforementioned figures, and in accordance with the adopted numbering, one may observe therein a preferred exemplary embodiment of the invention, which comprises the parts and elements indicated and described in detail below.

The embodiment shown of the sealing element for pipes comprises a body (1) of injection-mouldable plastic material, for example, low density polyethylene (LDPE), with a degree of elasticity such that it makes it easier for the operator to assemble the cap since less effort is required to place it in the holes of a tube. Although this task is simple, it is important to bear in mind that this aspect is relevant when the operator must place a large number of sealing elements during a workday.

The body (1) is made up of an elongated central stem section (2), with a cross-shaped cross-section, which has at one end a circular head region (3) with a flat surface acting as a grip area for the user in the operations of placing and removing the sealing element at one end of the conduit, as well as abutment with the side wall of the tube, once it is assembled.

As can be seen, the head (3) notably protrudes radially with respect to the central stem section (2).

The central stem section (2) includes along the same and in a downstream direction from said head region (3) and separately, a first contour centring region (4) with a general inverted frustoconical shape provided to facilitate the fitting and therefore centring of the sealing element inside the conduit to be covered, a second circumferential outer contour region that is defined by two flexible flaps (5), which are formed from a pair of diametrically opposed grooves (6), and a third circumferential outer contour positioning region (7), the second region having a larger diameter than the first and third regions.

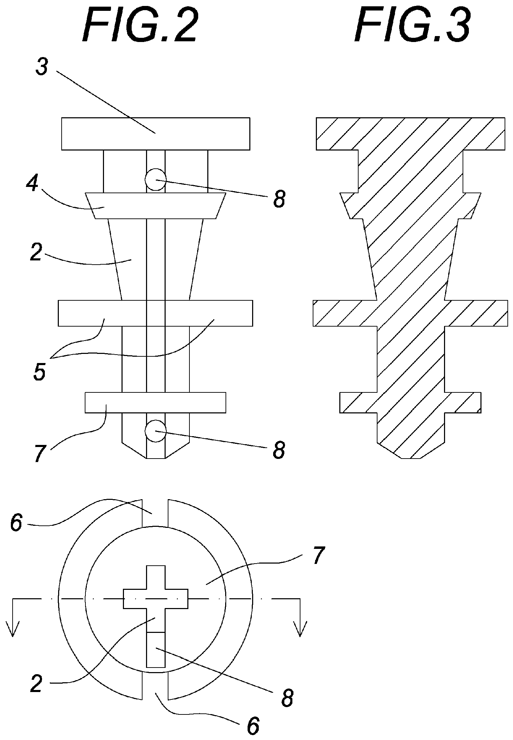

The cross-shaped cross-section comprised between the first and second regions has a decreasing configuration in a downstream direction from the first region towards the second region, as can be seen more clearly in Figures 2 and 3.

Additionally, it includes at least two spaced extensions (8), which protrude in one same direction perpendicular to the central stem section (2), which have a length equal to or less than the diameter of the third positioning region (7). It should also be mentioned that these extensions (8) are parallel to the grooves (6), such that it also allows them to be used as reference or guide points during the insertion action of the sealing element in a corresponding hole.

In an exemplary embodiment that is non-limiting from a dimensional point of view, the head region can have an outer diameter about 10 mm, the first centring region about 7.4 mm, the outer diameter of the flexible flaps about 10.2 mm, while the third positioning region can have a diameter about 7.4 mm.

The details, shapes, dimensions and other secondary elements, used to manufacture the sealing element of the invention, may be suitably replaced with others that do not depart from the scope defined by the claims included below.

## Claims

1. A sealing element for pipes, comprising a body (1) of injection-mouldable plastic material, being made up of a central stem section (2) that has at one end a circular head region (3) acting as a grip area, including on a stem section in a downward direction from said head region (3), a first centring region (4) with a general inverted frustoconical shape, a second circumferential outer contour region that is defined by at least two flexible flaps (5) formed from a pair of diametrically opposed grooves (6) and a third circumferential outer contour positioning region, the second region having a larger diameter than the first and third regions, **characterised in that** it includes at least two spaced extensions (8), which protrude in one same direction perpendicular to the central stem section (2), which have a length equal to or less than the diameter of the third positioning region.

2. The sealing element for pipes according to claim 1, **characterised in that** each of the extensions (8) is located in a region close to the two opposite ends of the central stem section (2).

3. The sealing element for pipes according to any of the preceding claims, **characterised in that** the central stem (2) has a cross-shaped cross-section.

4. The sealing element for pipes according to claims 1 and 3, **characterised in that** the cross-shaped cross-section comprised between the first and second regions has a decreasing configuration in a downstream direction from the first region towards the second region.

## Patentansprüche

1. Dichtelement für Rohre, umfassend einen Körper (1) aus spritzgießbarem Kunststoff, der aus einem zentralen Schaftabschnitt (2), der an einem Ende einen kreisförmigen Kopfbereich (3) aufweist, der als Griffbereich dient, einschließlich eines an einem Schaftabschnitt in einer Abwärtsrichtung ab dem Kopfbereich (3) befindlichen ersten Zentrierbereichs (4) mit einer allgemein umgekehrt kegelstumpfförmigen Form, eines zweiten umlaufenden Außenkonturbereichs, der durch mindestens zwei flexible Klappen (5) definiert ist, die aus einem Paar diametral gegenüberliegender Nuten (6) gebildet ist, und eines dritten umlaufenden Außenkonturpositionierungsbereichs, wobei der zweite Bereich einen größeren Durchmesser als der erste und der dritte Bereich aufweist, **dadurch gekennzeichnet, dass** er mindestens zwei voneinander entfernte Verlängerungen (8) umfasst, die in derselben Richtung senkrecht zum zentralen Schaftabschnitt (2) vorstehen, die eine Länge aufweisen, die gleich oder kleiner als der Durchmesser des dritten Positionierungsbereichs ist.

2. Dichtelement für Rohre nach Anspruch 1, **dadurch gekennzeichnet, dass** sich jede der Verlängerungen (8) in einem Bereich nahe den beiden gegenüberliegenden Enden des zentralen Schaftabschnitts (2) befindet.

3. Dichtelement für Rohre nach einem der vorhergehenden Ansprüche, **dadurch gekennzeichnet, dass** der zentrale Schaft (2) einen kreuzförmigen Querschnitt aufweist.

4. Dichtelement für Rohre nach den Ansprüchen 1 und 3, **dadurch gekennzeichnet, dass** der kreuzförmige Querschnitt, der zwischen dem ersten und dem zweiten Bereich in einer Abwärtsrichtung enthalten ist, ab dem ersten Bereich in Richtung des zweiten Bereichs eine abnehmende Konfiguration aufweist.

## Revendications

1. Élément d'étanchéité pour tuyaux, comprenant un corps (1) en matière plastique pouvant être moulée par injection, étant constitué d'une section de tige centrale (2) qui présente au niveau d'une extrémité une région de tête circulaire (3) agissant en guise de zone de préhension, comprenant sur une section de tige dans une direction vers le bas à partir de ladite région de tête (3), une première zone de centrage (4) avec une forme générale tronconique inversée, une deuxième région de contour extérieur circonférentiel qui est définie par au moins deux volets flexibles (5) formés à partir d'une paire de rainures diamétralement opposées (6) et une troisième région de positionnement de contour extérieur circonférentiel, la deuxième région ayant un diamètre plus grand que les première et troisième régions, **caractérisé en ce qu'**il comporte au moins deux extensions espacées (8), qui font saillie dans une même direction perpendiculaire à la section de tige centrale (2), qui ont une longueur égale ou inférieure au diamètre de la troisième région de positionnement.

2. Élément d'étanchéité pour tuyaux selon la revendication 1, **caractérisé en ce que** chacune des extensions (8) est située dans une région proche des deux extrémités opposées de la section de tige centrale (2).

3. Élément d'étanchéité pour tuyaux selon l'une quelconque des revendications précédentes, **caractérisé en ce que** la tige centrale (2) a une section transversale en forme de croix.

4. Élément d'étanchéité pour tuyaux selon les revendications 1 et 3, **caractérisé en ce que** la section transversale en forme de croix comprise entre les première et deuxième régions a une configuration décroissante dans une direction aval à partir de la première région vers la deuxième région.
